# EUROPEAN PATENT APPLICATION

(11) **EP 2 306 674 A1**
(43) Date of publication of application: **06.04.2011**
(21) Application number: 09305922.8
(22) Date of filing: 30.09.2009
(51) Int. Cl.: H04L 12/26

(54) **Delay asymmetry monitoring for 2-way time protocols**

(71) Applicant: Alcatel Lucent, 75008 Paris (FR)
(72) Inventor: Le Pallec, Michel, 91620 Nozay (FR); Bui, Dinh Thai, 91620 Nozay (FR); Le Sauze, Nicolas, 91620 Nozay (FR)
(74) Representative: Nicolle, Olivier

(57) **Abstract**

A delay asymmetry minimizing method is disclosed for providing generally symmetrical delays for timing packets traversing a network node. The delay asymmetry minimizing method includes ensuring that a first timing packet traversing a network node in one direction will traverse the same set of port buffers which a second timing packet traversing the same network node in the opposite direction will traverse resulting in an effective cancellation of delay asymmetry. First and second timing packets are presumed to be traversing a reverse tunneling connection. The delay asymmetry minimizing method is particularly useful for overcoming the need for auxiliary timing equipment of delay asymmetry methods known in the art.

## Description

### Field of the invention

The invention relates to delay asymmetry monitoring and is particularly concerned with compensating for variable delays as packets traverse different input and output buffers within network devices.

### Background of the Invention

Time distribution protocols, such as IETF NTP (Network Time Protocol version 3 & 4) and IEEE-1588 Version 2 are used for supporting the distribution of time (and thus frequency) over Packet Switched Networks. NTP relies on UDP (User Datagram Protocol) or TCP/IP (Transmission Control Protocol / Internet Protocol), whereas IEEE-1588 V2 typically relies on UDP/IP or Ethernet (and is also supported over other protocols such as DeviceNet). NTP and IEEE-1588 may be deployed together on the same network transparently to each other.

Path delay asymmetry and Packet Delay Variation (PDV) are significant issues regarding time distribution in Packet Switched Networks (PSNs). In particular, queuing delays experienced by time packets while traversing network element (NE) buffers directly impact accuracy of distributed time (wall clock) through PDV or through delay asymmetry while using two-way time distribution protocols such as NTP (Network Time Protocol) or IEEE-1588 V2.

These two-way protocols assume a symmetrical path delay and as a result, delay asymmetry is a vector of time inaccuracy. Typically the achievable time accuracy is one-half of the delay asymmetry.

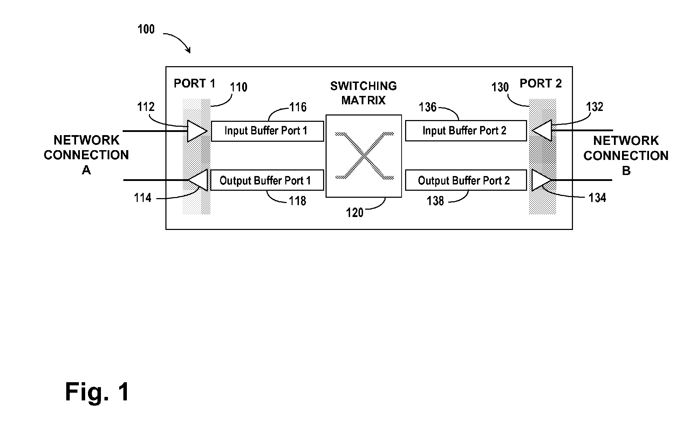

Referring to **Fig. 1** there may be seen an example of a network node 100. Network Connection A terminates on port 110 having receiver 112 and associated input buffer 116, and transmitter 114 with associated output buffer 118. Network Connection B terminates on port 130 having receiver 132 and associated input buffer 136, and transmitter 134 with associated output buffer 138. Also present in network node 100 is switching matrix 120 which may operate to connect packets traversing the network node.

Operation of the depicted node is best illustrated by way of example. For example, a packet routed from Network Connection A to Network Connection B would enter network node 100 at port 110 on receiver 112 and be queued in input buffer 116. After preceding packets in input buffer 116 were processed, the packet would be routed across switching matrix 120 to output buffer 138 for queueing therein until transmitter 134 can transmit the packet out of port 130 to Network Connection B. Note that the network node transit times include the time the packet dwells in the input queue in input buffer 116, the time spent transiting the switching matrix 120, and the time the packet dwells in the output queue in output buffer 138. In general, this time will not necessarily match the transit time from Network Connection B to Network Connection A as different input and output queues are involved.

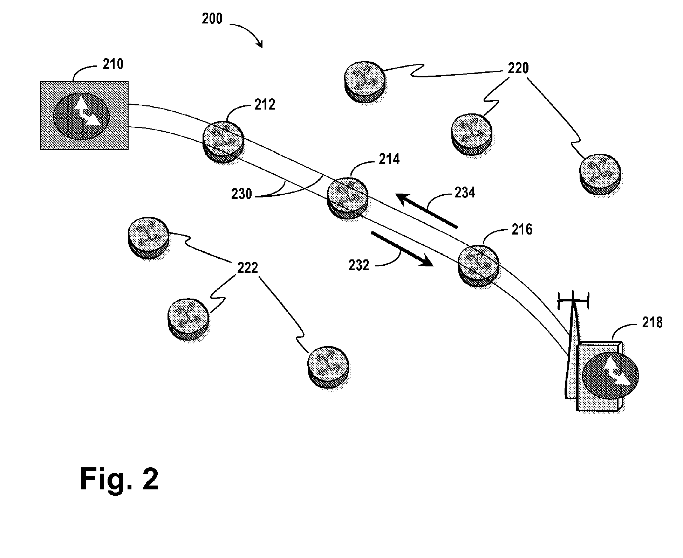

...Referring now to **Fig. 2****,** there may be seen a network 200 having network nodes 210, 212, 214, 216, 218, 220, and 222. Master clock network node 210 (for example an IEEE-1588 V2 master clock) is connected to slave clock node 218 (for example an IEEE-1588 V2 slave clock)via a reverse tunneling connection path 230 established through network nodes 212, 214, and 216. Path direction 232 indicates the direction of packet flow from master 210 to slave 218, and path direction 234 indicates the direction of packet flow from slave 218 to master 210.

As timing packets traverse the connection path 230, the delays incurred in crossing network nodes 212, 214, and 216 will not be the same in both path directions 232 and 234 as discussed above in relation to Fig. 1. The disparity in delays results in delay asymmetry, thus affecting the accuracy with which timing can be disseminated from master node 210 to slave node 218.

"On-node support" such as transparent clocks in IEEE-1588 V2 make it possible to measure the traversal delays induced by Networks Elements in both directions and thus to compensate the delay asymmetry at the protocol level.

Nevertheless, this technique has a number of drawbacks, including:

- needs a specific and costly hardware upgrade;

- is not agnostic as it depends on the used time protocol (e.g. Transparent Clocks for IEEE-1588 V2 ); and

- needs to be deployed at each network nodes for an optimized result.

Therefore, it would be desirable to have a method of minimizing delay asymmetry which would not incur the expense and complications of delay asymmetry correction as available in the prior art.

### Summary of the Invention

It is an object of the invention to provide a method for minimizing delay asymmetry.

According to an aspect of the invention there is provided a method for providing a first transition delay for a first timing packet traversing a network device in the Master towards Slave direction, which is generally symmetrical to a second transition delay for a second timing packet traversing the network device in the Slave towards Master direction. The method has a first step of identifying the first timing packet upon arrival at the network device; then a step of adding identification information to the first timing packet; and then switching the first timing packet using the identification information so that the first timing packet traverses a set of port buffers which corresponds to the same set of port buffers the second timing packet would traverse.

In some embodiments of the invention the set of port buffers has a first set of buffers related to the communication port connected towards the Master direction; and a second set of buffers related to the communication port connected towards the Slave direction. The first set of port buffers has a Master side input buffer (e.g. to store incoming packets from the Master) and a Master side output buffer (e.g. to store outgoing packets towards the Master); and the second set of port buffers has a Slave side input buffer and a Slave side output buffer.

Advantageously, the switching step consists of first switching the first timing packet from the Master side input buffer to the Slave side input buffer; then switching the first timing packet from the Slave side input buffer to the Master side output buffer; and then switching the first timing packet from the Master side output buffer to the Slave side output buffer.

Alternatively, the switching step may consist of first switching the first timing packet from the Master side input buffer to the Master side output buffer; then switching the first timing packet from the Master side output buffer to the Slave side input buffer; and then switching the first timing packet from the Slave side input buffer to the Slave side output buffer.

According to another aspect of the invention there is provided a method for providing a first transition delay for a first timing packet traversing a network device in the Slave towards Master direction which is generally symmetrical to a second transition delay for a second timing packet traversing the network device in the Master towards Slave direction. The method consists of the steps of identifying the first timing packet upon arrival at the network device; adding identification information to the first timing packet; and switching the first timing packet using the identification information so that the first timing packet traverses a set of port buffers which corresponds to the same set of port buffers the second timing packet would traverse.

In some embodiments of the invention the set of port buffers has a first set of buffers related to the communication port connected towards the Master direction; and a second set of buffers related to the communication port connected towards the Slave direction. The first set of port buffers has a Master side input buffer and a Master side output buffer; and the second set of port buffers has a Slave side input buffer and a Slave side output buffer.

Advantageously, the switching step consists of first switching the first timing packet from the Slave side input buffer to the Master side input buffer; then switching the first timing packet from the Master side input buffer to the Slave side output buffer; and then switching the first timing packet from the Slave side output buffer to the Master side output buffer.

Alternatively, the switching step may consist of first switching the first timing packet from the Slave side input buffer to the Slave side output buffer; then switching the first timing packet from the Slave side output buffer to the Master side input buffer; and then switching the first timing packet from the Master side input buffer to the Master side output buffer.

Some embodiments of the invention include using the invention to propagate timing packets associated with IEEE-1588 protocol. Alternative embodiments of the invention include using the invention to propagate timing packets associated with IETF Network Time Protocol. Further alternative embodiments may be used to propagate timing packets associated with any protocol which is desirous of minimizing delay asymmetry for timing packets.

Note: in the following the description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

### Brief Description of the drawings

The present invention will be further understood from the following detailed description of embodiments of the invention, with reference to the drawings in which:

**Fig. 1** illustrates an example of a network node and the packet traversal paths in accordance with the known art;

**Fig. 2** illustrates a set of network devices forming a reverse tunneling connection path across a network in accordance with the known art;

**Figs. 3a** and **3b** illustrates an example of a network node and the packet traversal paths in accordance with a first embodiment of the present invention; and

**Figs. 4a** and **4b** illustrates an example of a network node and the packet traversal paths in accordance with a second embodiment of the present invention.

### Detailed Description

According to a proposed embodiment of the invention there is established a specific switching sequence at the network node level in order to guarantee that the timing packets for each transmission direction take similar paths in terms of node traversal delays. These paths are referred to as Master-towards-Slave and Slave-towards-Master using IEEE-1588 terminology. Alternatively, these paths may be referred to as server-towards-client and client-towards-server using IETF NTP terminology. Referring to **Fig. 2****,** the paths may be seen at 230, with the Master-towards-Slave/server-towards-client direction indicated by 232, and the Slaves-towards-Master/ client-towards-server direction indicated by 234.

In this embodiment, as is usually the case in present high-speed networks, timing packets are assumed to be monitored in high priority network node queues. That is, timing packets are distinguished from other kinds of packets upon arrival and may be treated differently than other kinds of packets. Such treatment may involve adding additional labels to timing packet headers which carrying processing instructions for further mechanisms within the network node.

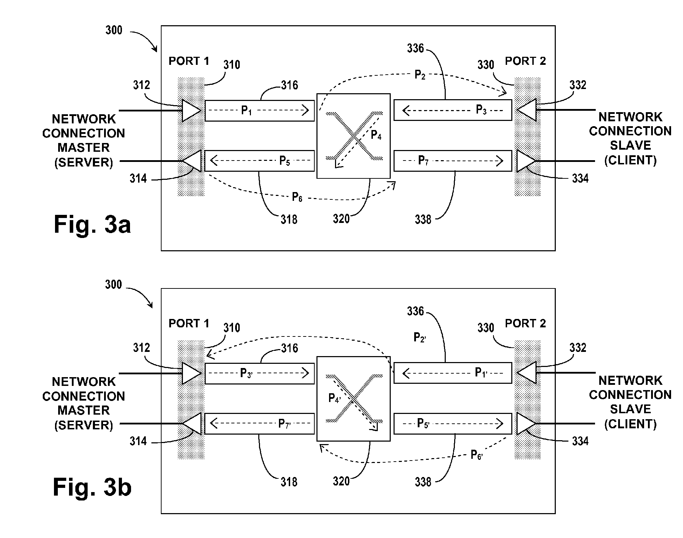

According to a first embodiment of the invention, timing packets are required to transit a network node as illustrated in **Figs. 3a** and **3b** wherein **Fig. 3a** illustrates the path of a timing packet associated with the Master-towards-Slave direction and **Fig. 3b** illustrates the path of a timing packet associated with the Slave-towards-Master direction.

Referring now to **Fig. 3a** there may be seen a network node 300 having first port 310 with receiver 312 and associated input buffer 316, and transmitter 314 with associated output buffer 318. As well, there may be seen second port 330 with receiver 332 and associated input buffer 336, and transmitter 334 with associated output buffer 338. These input and output buffers are connected via switching matrix 320 which can route packets from the buffers of the first port to the buffers of the second port and vice-versa.

According to this first embodiment of the invention, the arrival of a timing packet from the Master side of the network takes the following path through the queues of the input/output buffers and switching matrix:

P₁ → P₂ → P₃ → P₄ → P₅ → P₆ → P₇

Note that paths P₂ and P₆ do not represent a path external to the switching matrix 320. Instead, they represent a path through the switching matrix 320 that results in the timing packet being deposited at the input of the respective buffer. In general, these buffers are high speed memory space dedicated to packet storage located upon a particular port card, and once a packet has been switched to the respective port card, it is at the suitable location to be placed in the indicated buffer without further transitioning of the network node's switching matrix.

The transition times thus associated with a timing packet traversing the network node in the Master-towards-Slave direction thus amounts to:

t_{M→S} = t(P₁) + t(P₂) + t(P₃) + t(P₄) + t(P₅) + t(P₆) + t(P₇) Eq. 1

Referring now to **Fig. 3b****,** there is depicted the path of a timing packet arriving from the Slave side of the network. According to this first embodiment, the path of the timing packet through network node 300 through the queues of the input/output buffers and switching matrix is as follows:

P_{1'}→ P_{2'} → P_{3'} → P_{4'} → P₅' →P_{6'} → P_{7'}

The transition times thus associated with a timing packet traversing the network node in the Slave-towards-Master direction thus amounts to:

t_{S→M} = t(P1_{'}) + t(P_{2'}) + t(P_{3'}) + t(P_{4'}) + t(P_{5'}) + t(P_{6'}) + t(p_{7'}) Eq. 2

The asymmetry delay produced by the timing packet traversing the network node in these two directions is defined as:

t_{AD} = t_{M→S} - t_{S→M}

Therefore,

t_{AD} = (t(P₁)+t(P₂)+t(P₃)+t(P₄)+t(P₅)+t(P₆)+t(P₇)) - ((t(P_{1'})+t(P_{2'})+t(P_{3'})+t(P_{4'})+t(P_{5'})+t(P_{6'})+t(P_{7'}))

By inspecting **Figs. 3a** and **3b****,** it may be seen that there are transition times associated with traversing switching matrix 320, namely t(P₂), t(P₄), and t(P₆) and t(P_{2'}), t(P_{4'}), and t(P_{6'}). As these transition times are associated in each case with traversing the switching matrix 320, they are for substantially equal and thus may be seen to cancel each other in the expression for t_{AD}.

Therefore the above expression may be simplified by removing the transition times associated with traversing the switching matrix 320 which results in:

t_{AD} = (t(P₁)+t(P₃)+t(P₅)+t(P₇)) - ((t(P_{1'})+t(P₃,)+t(P_{5'})+t(P_{7'}))

By further inspection of **Figs. 3a** and **3b** it may be noted that the certain of the respective path times refer to the transition time of the same buffer, namely: P₁ and P_{3'} represent transiting the same buffer, P₃ and P_{1'} represent transiting the same buffer, P₅ and P_{7'} represent transiting the same buffer, and P₇ and P_{5'} represent transiting the same buffer.

Under the conditions that there are equivalent buffer loads between the P_{M→S} and P_{S→M} paths, then the transition times for the respective buffers also effectively cancels out, resulting in:

t_{AD} ≈ 0

Therefore, this first embodiment has demonstrated that selection of a specific switching sequence at the network node level in order to provide that the timing packets for each transmission direction take similar paths in terms of node traversal delays can result in an asymmetry delay which is substantially zero.

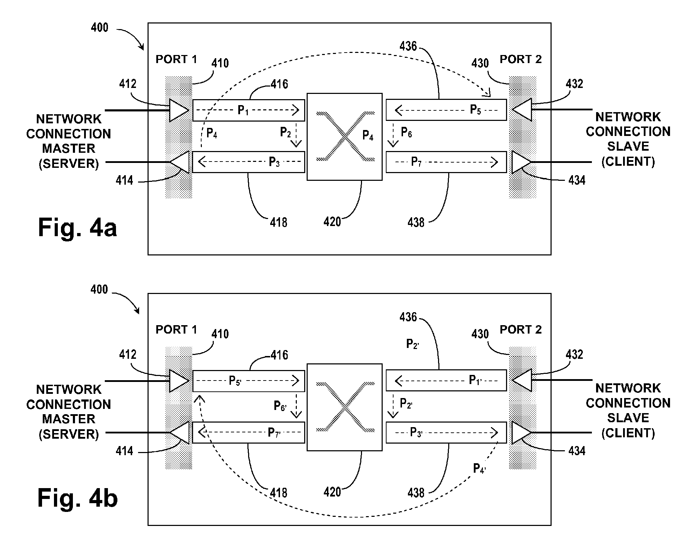

Referring now to **Figs. 4a** and **4b****,** there may be seen an alternative set of transit paths which also serve to result in an asymmetry delay which is substantially zero.

Referring now to **Fig. 4a** there may be seen a network node 400 having first port 410 with receiver 412 and associated input buffer 416, and transmitter 414 with associated output buffer 418. As well, there may be seen second port 430 with receiver 432 and associated input buffer 436, and transmitter 434 with associated output buffer 438. These input and output buffers are connected via switching matrix 420 which can route packets from the buffers of the first port to the buffers of the second port and vice-versa.

According to this second embodiment of the invention, the arrival of a timing packet from the Master side of the network takes the following path through the queues of the input/output buffers and switching matrix:

P₁ → P₂ → P₃ → P₄ → P₅ → P₆ → P₇

Note that path P₄ does not represent a path external to the switching matrix 420. Instead, it represents a path through the switching matrix 420 that results in the timing packet being deposited at the input of the respective buffer. However, paths P₂ and P₆ do represent a path external to switching matrix 420 in that these paths represent the timing packet being deposited in the appropriate buffer on the same port card, thus obviating the need for a switching operation.

The transition times thus associated with a timing packet traversing the network node in the Master-towards-Slave direction thus amounts to:

t_{M→S} = t(P₁) + t(P₂) + t(P₃) + t(P₄) + t(P₅) + t(P₆) + t(P₇) Eq. 3

Referring now to **Fig. 4b****,** there is depicted the path of a timing packet arriving from the Slave side of the network. According to this first embodiment, the path of the timing packet through network node 400 through the queues of the input/output buffers and switching matrix is as follows:

P_{1'} → P_{2'} → P_{3'} → P_{4'} → P_{5'} → P_{6'} → P_{7'}

The transition times thus associated with a timing packet traversing the network node in the Slave-towards-Master direction thus amounts to:

t_{S}→_{M} = t(P_{1'}) + t(P_{2'}) + t(P_{3'}) + t(P_{4'}) + t(P_{5'}) + t(P_{6'}) + t(P_{7'}) Eq. 4

The asymmetry delay produced by the timing packet traversing the network node in this two directions has already been defined as:

t_{AD} = t_{M→S} - t_{S→M}

Therefore, as in the first embodiment:

t_{AD} = (t(P₁)+t(P₂)+t(P₃)+t(P₄)+t(P₅)+t(P₆)+t(P₇)) - ((t(P_{1'})+t(P_{2'})+t(P_{3'})+t(P_{4'})+t(P_{5'})+t(P_{6'})+t(P_{7'}))

By inspecting **Figs. 4a** and **4b****,** it may be seen that there are transition times associated with traversing switching matrix 420, namely t(P₄) and t(P_{4'}). As these transition times are associated in each case with traversing the switching matrix 420, they are for substantially equal and thus cancel each other.

By further inspection of **Figs. 4a** and **4b** it may be noted that the certain of the respective path times refer to the transition time of the same buffer, namely: P₁ and P_{5'} represent transiting the same buffer, P₃ and P₇' represent transiting the same buffer, P₅ and P_{1'} represent transiting the same buffer, and P₇ and P_{3'} represent transiting the same buffer. Further, it can be seen that P₂ and P_{6'} represent a transfer from the same buffers to the same buffers; and that P6 and P_{2'} represent a transfer from the same buffers to the same buffers.

By respecting these equivalences, and under the conditions that there are equivalent buffer loads between the P_{M→S} and P_{S→M} paths, then the transition times for the respective buffers also effectively cancels out, resulting again in:

t_{AD} ≈ 0

Therefore, this second embodiment has also demonstrated that selection of a specific switching sequence at the network node level in order to guarantee that the timing packets for each transmission direction take similar paths in terms of node traversal delays can result in an asymmetry delay which is substantially zero.

Summarizing, there has been presented a method consisting in applying a specific transition path to the timing packets in such a way that they experience similar buffering effects and switching events in both directions as they traverse the network through network nodes.

In application, this method generally employs:

- a transmission in a connected mode using a reverse tunneling mechanism; i.e. that all the timing packets have to cross the same network nodes in the two one-way directions as illustrated in **Fig. 2****;**

- a mechanism to identify/isolate timing packets; and

- a mechanism to mark timing packets according to their direction of propagation in order to recognize and re-direct timing packets towards appropriate ports/buffers.

This latter mechanism could, for example, comprise an identifier which is added to an identified timing packet. The identifier would have as at least a portion of it, the target buffer for which the timing packet was to be sent. At arrival at each buffer the identifier could be updated, eventually resulting in the timing packet exiting the network node at the appropriate port having transitioned all the relevant buffers.

The present invention can be embodied in the form of methods and apparatuses for practicing those methods. The present invention can also be embodied in the form of program code embodied in tangible media, such as magnetic recording media, optical recording media, solid state memory, floppy diskettes, CD-ROMs, hard drives, or any other machine-readable storage medium, wherein, when the program code is loaded into and executed by a machine, such as a computer, the machine becomes an apparatus for practicing the invention. The present invention can also be embodied in the form of program code, for example, whether stored in a storage medium or loaded into and/or executed by a machine, wherein, when the program code is loaded into and executed by a machine, such as a computer, the machine becomes an apparatus for practicing the invention. When implemented on a general-purpose processor, the program code segments combine with the processor to provide a unique device that operates analogously to specific logic circuits.

It will be further understood that various changes in the details, materials, and arrangements of the parts which have been described and illustrated in order to explain the nature of this invention may be made by those skilled in the art without departing from the scope of the invention as expressed in the following claims.

It should be understood that the steps of the exemplary methods set forth herein are not necessarily required to be performed in the order described, and the order of the steps of such methods should be understood to be merely exemplary. Likewise, additional steps may be included in such methods, and certain steps may be omitted or combined, in methods consistent with various embodiments of the present invention.

Although the elements in the following method claims, if any, are recited in a particular sequence with corresponding labeling, unless the claim recitations otherwise imply a particular sequence for implementing some or all of those elements, those elements are not necessarily intended to be limited to being implemented in that particular sequence.

Reference herein to "one embodiment" or "an embodiment" means that a particular feature, structure, or characteristic described in connection with the embodiment can be included in at least one embodiment of the invention. The appearances of the phrase "in one embodiment" in various places in the specification are not necessarily all referring to the same embodiment, nor are separate or alternative embodiments necessarily mutually exclusive of other embodiments. The same applies to the term "implementation." Numerous modifications, variations and adaptations may be made to the embodiment of the invention described above without departing from the scope of the invention, which is defined in the claims.

## Claims

1. A method for providing a first transition delay for a first timing packet traversing a network device in the Master towards Slave direction which is generally symmetrical to a second transition delay for a second timing packet traversing the network device in the Slave towards Master direction, said method comprising:
identifying said first timing packet upon arrival at said network device;
adding identification information to said first timing packet; and
switching said first timing packet using said identification information so that said first timing packet traverses a set of port buffers which corresponds to the same set of port buffers said second timing packet would traverse.

2. A method as claimed in claim 1, wherein said set of port buffers comprises a first set of port buffers connected towards said Master direction; and
a second of port buffers connected towards said Slave direction.

3. A method as claimed in claim 2, wherein
said first set of port buffers comprises a Master side input buffer and a Master side output buffer; and
said second set of port buffers comprises a Slave side input buffer and a Slave side output buffer.

4. A method as claimed in claim 3, wherein said switching step comprises
first switching said first timing packet from said Master side input buffer to said Slave side input buffer;
then switching said first timing packet from said Slave side input buffer to said Master side output buffer; and
then switching said first timing packet from said Master side output buffer to said Slave side output buffer.

5. A method as claimed in claim 3, wherein said switching step comprises
first switching said first timing packet from said Master side input buffer to said Master side output buffer;
then switching said first timing packet from said Master side output buffer to said Slave side input buffer; and
then switching said first timing packet from said Slave side input buffer to said Slave side output buffer.

6. A method for providing a first transition delay for a first timing packet traversing a network device in the Slave towards Master direction which is generally symmetrical to a second transition delay for a second timing packet traversing the network device in the Master towards Slave direction, said method comprising:
identifying said first timing packet upon arrival at said network device;
adding identification information to said first timing packet; and
switching said first timing packet using said identification information so that said first timing packet traverses a set of port buffers which corresponds to the same set of port buffers said second timing packet would traverse.

7. A method as claimed in claim 6, wherein said set of port buffers comprises a first set of port buffers connected towards said Master direction; and
a second of port buffers connected towards said Slave direction.

8. A method as claimed in claim 7, wherein
said first set of port buffers comprises a Slave side input buffer and a Slave side output buffer; and
said second set of port buffers comprises a Master side input buffer and a Master side output buffer.

9. A method as claimed in claim 8, wherein said switching step comprises
first switching said first timing packet from said Slave side input buffer to said Master side input buffer;
then switching said first timing packet from said Master side input buffer to said Slave side output buffer; and
then switching said first timing packet from said Slave side output buffer to said Master side output buffer.

10. A method as claimed in claim 8, wherein said switching step comprises
first switching said first timing packet from said Slave side input buffer to said Slave side output buffer;
then switching said first timing packet from said Slave side output buffer to said Master side input buffer; and
then switching said first timing packet from said Master side input buffer to said Master side output buffer.
